(19) Europäisches Patentamt
European Patent Office
Office européen des brevets

(11) **EP 0 514 146 B1**

(12) **EUROPEAN PATENT SPECIFICATION**

(45) Date of publication and mention
of the grant of the patent:
**26.11.1997 Bulletin 1997/48**

(51) Int Cl.6: **C08J 5/18**, C08L 77/06,
C08L 77/00
// (C08L77/06, 77:06, 23:04)

(21) Application number: **92304297.2**

(22) Date of filing: **13.05.1992**

(54) **Oriented film made of polyamide resin composition**

Orientierter Film aus Polyamidharzzusammensetzung

Film orienté à base d'une composition de résine polyamide

(84) Designated Contracting States:
**DE ES GB NL**

(30) Priority: **17.05.1991 JP 141405/91**

(43) Date of publication of application:
**19.11.1992 Bulletin 1992/47**

(73) Proprietor: **KUREHA KAGAKU KOGYO
KABUSHIKI KAISHA
Chuo-ku Tokyo 103 (JP)**

(72) Inventors:
• **Hisazumi, Nobuyuki
Tsuchiura-shi, Ibaraki-ken (JP)**
• **Uehara, Tsutomu
Niihari-gun, Ibaraki-ken (JP)**
• **Sato, Tomoaki
Niihari-gun, Ibaraki-ken (JP)**

(74) Representative: **Sanderson, Nigel Paul et al
Haseltine Lake & Co.
Hazlitt House
28, Southampton Buildings
Chancery Lane
London WC2A 1AT (GB)**

(56) References cited:
**EP-A- 0 409 666**

• **DATABASE WPI Section Ch, Week 8128,
Derwent Publications Ltd., London, GB; Class
A32, AN 81-50887D & JP-A-56 062 129 (TOYOBO
KK) 27 May 1981**
• **DATABASE WPI Week 8838, Derwent
Publications Ltd., London, GB; AN 81-45070D &
JP-B-63 043 217 (TOYOBO) 29 August 1988**
• **DATABASE WPI Week 7638, Derwent
Publications Ltd., London, GB; AN 73-71229U &
JP-B-51 029 192 (TOYOBO) 25 August 1976**
• **PATENT ABSTRACTS OF JAPAN vol. 8, no. 41
(C-211)22 February 1984 & JP-A-58 201 845
(MITSUBISHI) 24 November 1983**

## Description

The present invention relates to a biaxially oriented film made of a resin composition comprising an aliphatic polyamide, a xylylene polyamide and a polyolefin. More particularly, it relates to a heat-shrinkable film for food packaging which is relatively small in modulus of elasticity at 1% elongation and low in water vapor transmission rate.

Recently, heat-shrinkable packages are used for food-packaging, especially fish meat, processed meat and the like, for the protection of the content and improvement of visual appearance of the package. On the other hand, since these packages are often requested to be kept in storage for a long time, the packaging material is required to have barrier properties against oxygen.

Various types of films such as polyvinylidene chloride film, a partially saponified ethylene-vinyl acetate copolymer film, aliphatic polyamide film and polyester film have been used as heat-shrinkable film having oxygen gas barrier properties for food packaging. Any of these films, however, has its own merits and demerits, and studies have been made for further improvement of these films.

Aliphatic polyamide film has the excellent properties in many respects such as toughness, heat resistance, cold resistance, oil resistance and transparency, but it has a large oxygen permeability coefficient under high humidity and it would be deteriorated in mechanical properties when it is subjected to a severe treatment such as sterilization by boiling or retort. Further, after retort sterilization of, for instance, the packs of liver sausage, there could take place discoloration of the contents due to oxidative degradation. For these reasons, the scope of use of this type of film has been limited.

To improve these defects of the aliphatic polyamide film, there has recently been developed and practically used a biaxially oriented film made of a composition comprising an aliphatic polyamide and a xylylene polyamide (see, for instance, Japanese Patent Publication Nos. 51-29192 and 63-43217 and Japanese Patent Application Kokai (Laid-Open) No. 56-62129). This biaxially oriented film made of a mixed composition of an aliphatic polyamide and a xylylene polyamide provides a heat-shrinkable film which is improved in oxygen gas barrier properties and has excellent heat resistance and dimensional stability, but this type of film is poor in flexibility and gives rise to some serious problems in practical use. For instance, handling becomes difficult when food such as sausage is filled in the film, resulting in shortening the life of the film cutter. Also, since the impact strength of the film becomes weak there could take place clip cut during clipping or formation of pinholes in the course of filling of sausage. Thus, this type of film had the problems relating to the mechanical packaging process.

Further, because of relatively high water vapor transmission rate, this film would cause loss in weight of the contents due to permeation of moisture especially in long-time storage of packaged food.

The present inventors have made extensive studies for obtaining a heat-shrinkable polyamide film which has a moderate flexibility, a water vapor transmission rate which cause no loss in weight of contents even in long-time storage, oxygen barrier properties, heat resistance and dimensional stability and also causes no discoloration of contents even after retort sterilization, and as a result, found that a biaxially oriented film made of a resin composition comprising an aliphatic polyamide, a xylylene polyamide and a polyolefin mixed in predetermined proportions has these properties without heat setting. The present invention was achieved on the basis of this finding.

According to the present invention, there is provided a biaxially oriented film of a resin composition comprising 45-90% by weight of an aliphatic polyamide, 5-45% by weight of a xylylene polyamide and 5-30% by weight of a polyolefin, wherein:

the aliphatic polyamide has a crystal melting point of 240°C or below;
the xylylene polyamide is a polyamide resin synthesized by a polycondensation reaction of metaxylylene diamine or a diamine mixture consisting of 60% by weight or more of metaxylylenediamine and 40% by weight or less of paraxylenediamine, and an $\alpha,\omega$-straight chain aliphatic dibasic acid having 6 to 12 carbon atoms; and
the polyolefin is one or more selected from high-density polyethylenes, medium-density polyethylenes, low-density polyethylene, polypropylene, ethylene-vinyl acetate copolymer with a vinyl acetate content of 5 to 20% by weight, ethylene-ethyl acrylate copolymer with an ethylacrylate content of 5 to 20% by weight, ethylene-methylacrylate copolymer with a methylacrylate content of 5 to 20% by weight, ethylene-propylene copolymer with an ethylene content of 2 to 7% by weight, ethylene-methacrylic acid copolymer with a methacrylic acid content of 5 to 20% by weight, ethylene-acrylic acid copolymer with an acrylic acid content of 5 to 20% by weight, linear low-density polyethylenes (LLDPE), very-low-density polyethylenes (VLDPE) ionomers, wherein the polyolefin comprises not less than 20% by weight of ethylene-acrylic acid copolymer, ethylene-ethylacrylate copolymer or ethylene-methylacrylate copolymer;
said film having modulus of elasticity at 1% elongation of 20 to 160 kg/mm$^2$ at 23°C and a relative humidity of 60% and water vapour transmission rate of not more than 70 g/m$^2$.day at 40°C and a relative humidity of 90%.

In an embodiment of the present invention the polyamide resin oriented film shows a dimensional change of not more than 10% after being left at 23°C and a relative humidity of 60% for 24 hours.

The aliphatic polyamide used in the present invention is the one having a crystal melting point of 240°C or below, preferably 230°C or below, more preferably 200°C or below. For example, there is used at least one of nylon selected from nylon 6, nylon 69, nylon 610, nylon 612, nylon 9, nylon 11, nylon 12, nylon 6-66, nylon 6-69, nylon 6-10, nylon 6-12, nylon 6-66-610 and nylon 66-610-12.

In the present invention, an aliphatic polyamide is used in an amount of 45 to 90% by weight, preferably 50 to 85% by weight. If the amount of the aliphatic polyamide is not more than 45% by weight, the produced composition lacks flexibility, while if the amount of said polyamide exceeds 90% by weight, the obtained composition is deteriorated in both dimensional stability and oxygen barrier properties under high humidity. The especially preferred aliphatic polyamide for use in the present invention is the one whose water absorptivity at 23°C and 100% relative humidity (RH) is not more than 8%, such as nylon 6-12, nylon 6-10, nylon 11 and nylon 12.

The xylylene polyamide used in the present invention is a polyamide resin synthesized from a polycondensation reaction of metaxylylene diamine, or an diamine mixture consisting of 60% by weight or more, preferably 70% by weight or more of metaxylylenediamine and 40% by weight or less, preferably 30% by weight or less of paraxylenediamine, and an $\alpha,\omega$-straight chain aliphatic dibasic acid having 6 to 12 carbon atoms, such as adipic acid, sebacic acid, suberic acid, diundecanoic acid, and didodecanoic acid. Such polyamide should have a glass transition temperature (Tg) of 50°C or above, preferably 55°C or above, more preferably 60°C or above. Examples of such polyamides include polymers such as polymetaxylyleneadipamide, polymetaxylylenesebacamide and polymetaxylylenesuberamide, copolymers such as metaxylylene-paraxylyleneadipamide copolymer, metaxylylene-paraxylylenepimeramide copolymer, metaxylylene-paraxylyleneazeramide copolymer and metaxylylene-paraxylyleneadibamide-sebacamide copolymer. These copolymers may contain an aliphatic amine such as hexamethylenediamine in such a small quantity that causes no adverse effect to the properties.

A xylylene polyamide is used in an amount of 5 to 45% by weight, preferably 10 to 40% by weight. If its amount is not more than 5% by weight, the obtained composition is unsatisfactory in heat resistance, mechanical strength and dimensional stability. If said amount exceeds 45% by weight, the obtained composition lacks flexibility.

The polyolefin used in this invention is selected from high-density polyethylenes, medium-density polyethylenes, low-density polyethylene, polypropylene, ethylene-vinyl acetate copolymer with a vinyl acetate content of 5 to 20% by weight, ethylene-ethyl acrylate copolymer with an ethylacrylate content of 5 to 20% by weight, ethylene-methylacrylate copolymer with a methylacrylate content of 5 to 20% by weight, ethylene-propylene copolymer with an ethylene content of 2 to 7% by weight, ethylene-methacrylic acid copolymer with a methacrylic acid content of 5 to 20% by weight, ethylene-acrylic acid copolymer with an acrylic acid content of 5 to 20% by weight, linear low-density polyethylenes, namely ethylene-$C_{4-12}$ $\alpha$-olefin copolymers (LLDPE), very-low-density polyethylenes (VLDPE) and ionomers. These polyolefin may be used either singly or in combination.

The polyolefin mixture comprising not less than 20% by weight, preferably not less than 30% by weight of above-mentioned ethylene-acrylic acid copolymer, ethylene-ethylacrylate copolymer or ethylene-methylacrylate copolymer is preferably used as polyolefin in view of compatibility with aliphatic polyamide and xylylene polyamide.

In the present invention, polyolefin is used in an amount of 5 to 30% by weight, preferably 5 to 25% by weight. If its amount is less than 5% by weight, it is impossible to provide moderate flexibility to the film, and also saturated water absorptivity and water vapor transmission rate of the film increases. If the amount of the polyolefin is more than 30% by weight, the obtained film is bad in transparency, and also orienting workability of the film at the time of its production is deteriorated, making the film susceptible to break and also making the industrial production of the film difficult.

Said aliphatic polyamide, xylylene polyamide and polyolefin can be mixed by a conventional method. It is possible to add a small quantity of an additive or additives such as plasticizer, stabilizer, lubricant, and antioxidant, as desired. The thus obtained composition is molded into a film by press molding, melt extrusion with an extruder, T-die extrusion, inflation, etc., using the known techniques. The molded non-oriented film is then biaxially oriented either simultaneously or successively by tentering or inflation method at a temperature of preferably 60 to 120°C.

It is desirable that the thus obtained biaxially oriented film has an oxygen gas permeability coefficient of preferably not more than $1.0 \times 10^{-11}$ cc·cm/cm²·sec cmHg ($7\text{-}50 \times 10^{-19}$ m²/Pa.s) at 30°C and 100% RH and a dimensional change of not more than 10%, preferably not more than 8%, at 23°C and 60% RH. If the oxygen gas permeability coefficient is more than the above-shown value, the contents such as fish meat, or processed meat might putrefy through oxidative degradation. Also, the contents could be discolored during storage after retort sterilization. When the dimensional change exceeds 10%, in case, for instance, the package is a tubular casing (clipped by metal), there arises the problem that especially when the content is a fine material of less than 50 Ø, it becomes difficult to make management of product standards or to operate the content by an ordinary filling machine.

In food packaging, it is essential that the package of food such as sausage will not be wrinkled. For keeping the packaging film free from wrinkles, it is necessary that the film be shrunk by heat and maintain a tense state during cooking or sterilization treatment. In case the film is immersed in hot water of 80°C for 10 seconds, it is desirable that the film shows a percent of heat shrinkage of not less than 5%, preferably not less than 8%.

The biaxially oriented film of this invention is further featured by high flexibility and low water vapor transmission rate. Modulus of elasticity at 1% elongation is often referred to as a measure of flexibility of film. The modulus of elasticity at 1% elongation of the biaxially oriented film of this invention is 20-160 kg/mm$^2$, preferably 30-160 kg/mm$^2$, and the water vapor transmission rate at 40°C and 90% RH is not more than 70 g/m$^2$·day, preferably not more than 60 g/m$^2$·day. If said modulus of elasticity is outside the range of 20-160 kg/mm$^2$, the film is too hard or too soft and can hardly stand the mechanical packaging process. If said water vapor transmission rate of the film exceeds 70 g/m$^2$·day, water in the content is allowed to easily pass through the film, causing too much loss in weight of the content during storage.

In the present invention, the xylylene polyamide, aliphatic polyamide and polyolefin do not constitute a uniform phase in the non-oriented film, but the xylylene polyamide and polyolefin are dispersed in the form of spherules in the aliphatic polyamide. When the film is oriented, the xylylene polyamide particles and polyolefin particles are oriented in a flat form to present a lamellar structure, which contributes to further improvement of oxygen gas permeability coefficient, water vapor transmission rate and transparency of the non-oriented film. In said lamellar structure, it is desirable that the flatness (long axis/short axis at a section of a dispersed particle) of the dispersed particles is not less than 5. For obtaining a film having a flatness of 5 or greater, it is desirable that the film be stretched 4 times or more, preferably 6 times or more, in terms of area stretch ratio. The ratio of percent of stretch in the machine direction to that in the transverse direction is not specifically defined, but it is desirable that the film be stretched at a same percent in both directions.

The biaxially oriented film according to the present invention is made of a composition comprising an aliphatic polyamide, a xylylene polyamide and a polyolefin mixed in a specified ratio. This film can constitute a heat shrinkable film which has moderate flexibility and appropriate water vapor transmission causing no loss in weight of the content even in long-time storage and is excellent in oxygen barrier properties, heat resistance and dimensional stability.

Therefore, the film of this invention is suited for packaging of food, especially fish meat and processed meat and facilitates the mechanical packaging process. Also, because of high heat resistance, this film can be subjected to severe treatments such as boiling or retort sterilization without suffering any deformation of the film or causing no loss in weight of the content during these treatments. Further, the film can prevent discoloration due to oxidative degradation of the content such as liver sausage, after the retort treatment and can maintain the original color of liver and other content packaged with the film.

## EXPERIMENTAL EXAMPLES

The present invention will hereinafter be described in further detail by showing examples thereof.

The properties of the biaxially oriented film of this invention were determined by the methods described below.

Percentage of heat shrinkage:

The film was cut into a 50 mm x 50 mm piece, and this square piece of film was dipped in hot water of 80°C for 10 seconds, then the size in length and breadth was measured (a) by a rule and percentage of shrinkage for longitudinal direction (L) and transverse direction (T) was determined from the following equation:

$$\text{Shrinkage (\%)} = \{(50 - (a)) \div 50\} \times 100$$

Modulus of elasticity at 1% elongation (flexibity) :

A 50 mm long and 20 mm wide test piece was kept in storage in an atmosphere of 23°C and 60% RH for 24 hours and then its secant modulus (kg/mm$^2$) at 1% displacement was measured at a drawing rate of 5 mm/min by using Tensilon UTM-1 of Toyo Baldwin Co., Ltd.

Dimensional change:

The film was cut into a 50 mm x 50 mm piece and left in a box controlled to an atmosphere of 23°C and 60% RH for 24 hours, then the size of said cut piece of film in length and breadth was measured (a) with a rule and dimensional changes in the longitudinal direction (L) and in the transverse direction (T) were calculated from the following equation:

$$\text{Dimensional change (\%)} = \{(50 - (a)) \div 50\} \times 100$$

Oxygen gas permeability coefficient ($PO_2$);

Measured according to ASTM D3985-81 under the conditions of 30°C and 100% RH by using MOCON OXTRAN-100 mfd. by Modern Control Co., Ltd.

Water vapor transmission rate (WVTR):

Measured by VAPOR PERMEATION TESTER L80-4000 (Lyssy Corp.) under the conditions of 40°C and 90% RH.

Haze:

Measured according to ASTM 1003 by using $\Sigma$80 COLOR MEASURING SYSTEM (Nippon Denshoku Kogyo). The values shown are those obtained by converting to 30 μm thickness. The films with a haze below 40% are practically usable.

Glass transition temperature (Tg):

Measured according to JIS KV121 by using DSC-2B Type (Perkin-Elmer Co.). Measurement was made by melting 5-10 mg of sample at a temperature of melting point of the resin + 40°C, then immediately cooling to 0°C at a rate of 100°C/min and measuring Tg in the course of heating at a rate of 20°C/min.

Flatness of dispersed particles:

There were prepared the ultra-thin cut pieces of film so that a cross section of the film could be observed. Each piece of film was photographed by using a transmission electron microscope 100CX (Nippon Denshi) and the flatness of the dispersed particle was determined according to the following formula:

$$\text{Flatness at a section of dispersed particle} = \frac{\text{long axis at the section of the particle}}{\text{short axis at the section of the particle}}$$

The "long axis at a section of dispersed particle" is the length in the oriented direction where the percent of stretch of the film is the greatest, and the "short axis at a section of dispersed particle" is the thickness of the thickest portion of the particle. Both long axis and short axis at a section of dispersed particle given in the above formula are the mean value of measurements on 20 particles.

Examples 1-2

60% by weight of 6-12 copolymer nylon (hereinafter abbreviated as 6-12 Ny) (6/12 copolymerization ratio = 85/15 in % by weight (using EMS Chemical's Grilon CR9, hereinafter referred to as Ny-A) in Example 1, and 6/12 copolymerization ratio = 80/20 in % by weight (using Toray Corporation's Amilan CM6541X4, hereinafter referred to as Ny-B) in Example 2, 30% by weight of a polymetaxylyleneadipamide (Mitsubishi Gas Chemical's MXD6 6001, hereinafter abbreviated as MXD) composed of metaxylylenediamine and adipic acid as xylylene polyamide, 5% by weight of a low-density polyethylene (Sumitomo Chemical's Sumikathene F114-1, hereinafter referred to as PE) and 5% by weight of an ethyleneacrylic acid copolymer (Exon Chemical's Escor TR5001, hereinafter referred to as EAA, acrylic acid content: 6% by weight) as polyolefin (hereinafter abbreviated as PO), were mixed and the mixture was melt kneaded and worked into pellets by using a twin screw extruder (BT-30 mfd. by Plastic Engineering Research Co.). The resin pellets thus prepared were melt pressed at 280°C by a conventional method using a bench press (AYSR-5 mfd. by Shindo Metal Industries Co., Ltd.) and then quickly cooled with a cold plate of 20°C to obtain a pressed sheet. This pressed sheet was stretched 3 times in the machine direction and 3 times transversely (9 times in terms of area stretch ratio) at 90°C by a biaxial stretching machine (mfd. by Toyo Seiki Co., Ltd.) to make a 30 μm thick film. The percentage of shrinkage, modulus of elasticity at 1% elongation, dimensional change, oxygen permeability coefficient (hereinafter referred to as $PO_2$) and water vapor transmission rate (hereinafter abbreviated as WVTR) and haze of the obtained film were measured to obtain the results shown in Table 1. Tg of MXD was 82°C, and water absorptivity of 6-12 Ny was 7.8% in the case of Ny-A and 7.5% in the case of Ny-B. Flatness of the dispersed particles in the film was 6.3 in the case of the composition of Example 1 (Ny-A + MXD + PO) and 8.6 in the case of the composition of Example 2 (Ny-B + MXD + PO). It will be seen that the oriented film according to the present invention is excellent in dimensional stability and can meet all of the property requirements for shrinkability, flexibility, gas barrier properties and transparency.

Comparative Examples 1-6

The oriented films were made in the same way as Example 2 from 6-12 Ny same as used in Example 2 (Comparative Example 1), MXD alone (Comparative Example 2), a mixed resin consisting of 80% by weight of 6-12 Ny and 20% by weight of PO (Comparative Example 3), a mixed resin consisting of 80% by weight of 6-12 Ny and 20% by weight of MXD (Comparative Example 4), a mixed resin consisting of 70% by weight of 6-12 Ny and 30% by weight of MXD (Comparative Example 5) and a mixed resin consisting of 60% by weight of 6-12 Ny and 40% by weight of MXD (Comparative Example 6), respectively. The dimensional change, percentage of shrinkage, modulus of elasticity at 1% elongation, $PO_2$, WVTR and haze of each of the obtained films were measured, the results being shown in Table 1. The film of Comparative Example 1 is large in dimensional change and high in $PO_2$ and WVTR. Comparative Example 2 is high in modulus of elasticity at 1% elongation. Comparative Example 3 is large in dimensional change and high in $PO_2$. Comparative Example 4 is high in $PO_2$ and WVTR. Comparative Examples 5 and 6 are both high in modulus of elasticity at 1% elongation and WVTR. Thus, any of the films according to Comparative Examples 1-6 is unable to satisfy all of the requirements for dimensional stability, shrinkability, flexibility, gas barrier properties and transparency at the same time.

Table 1

| | Resin composition | | | | Compositio-nal ratio % by wt. | Dimensional change % | Shrinkage % | Modulus of elasticity kg/mm$^2$ #1 | PO$_2$ #2 x 10$^{-12}$ | WVTR #3 | Haze % |
|---|---|---|---|---|---|---|---|---|---|---|---|
| | PA | MXD | PO | | | | | | | | |
| Example 1 | Ny-A | MXD | PE | EAA | 60/30/5/5 | 4 | 25 | 110 | 5.5 | 53 | 35 |
| Example 2 | Ny-B | MXD | PE | EAA | 60/30/5/5 | 3 | 25 | 130 | 5.2 | 45 | 38 |
| Comp. Example 1 | Ny-B | – | – | – | 100 | 16 | 28 | 110 | 18.2 | 180 | 6 |
| Comp. Example 2 | – | MXD | – | – | 100 | 0 | 14 | 400 | 1.0 | 21 | 3 |
| Comp. Example 3 | Ny-B | – | PE | EAA | 80/10/10 | 15 | 29 | 100 | 14.2 | 50 | 8 |
| Comp. Example 4 | Ny-B | MXD | – | – | 80/20 | 3 | 30 | 130 | 10.3 | 130 | 2 |
| Comp. Example 5 | Ny-B | MXD | – | – | 70/30 | 1 | 18 | 160 | 5.0 | 100 | 2 |
| Comp. Example 6 | Ny-B | MXD | – | – | 60/40 | 0 | 15 | 200 | 3.2 | 82 | 2 |

#1; modulus of elasticity at 1% elongation

#2; $cc \cdot cm/cm^2 \cdot sec \cdot cmHg$ $(0.75 \times 10^{-7} m^2/Pa.s)$

#3; $g/m^2 \cdot day$

Examples 3-9

6-12 Ny, MXD and PO (PE/EAA mixing ratio being 50% by weight in all cases) same as used in Example 2, were mixed in the ratios shown in Table 2, and each mixture was melt extruded by a twin-screw extruder same as used in Example 2 but adapted with a ring die. The molten resin discharged from the die was immediately cooled with water of 15°C to obtain a tubular parison. This parison was heated to 60-100°C by a heated roll system, immediately followed by injection of air into the parison to have it inflation stretched by air pressure to obtain a stretched tubular film having a thickness of 30μm and a width of 70 mm. The percents of stretch in the longitudinal direction (L) and in the transverse direction (T) in the above operation were 3.1 and 3.5 in Example 3, 3.5 and 4.3 in Example 4, 4.0 and 4.5 in Example 5, 4.0 and 4.5 in Example 6, 3.8 and 4.4 in Example 7, 3.9 and 4.3 in Example 8 and 4.0 and 4.4 in Example 9. The results of measurements of dimensional change, percentage of shrinkage, modulus of elasticity at 1% elongation, $PO_2$, WVTR and haze of each of the obtained tubular films are shown in Table 2. It is noted that the films according to the present invention can satisfy all of the property requirements mentioned above.

Table 2

| | Resin composition | | | | Compositional ratio % by weight | Dimensional change (L/T) % | Shrinkage (L/T) % | Modulus of elasticity L/T (kg/mm$^2$) | PO$_2$ x10$^{-12}$ | WVTR | Haze % |
|---|---|---|---|---|---|---|---|---|---|---|---|
| | PA | MXD | PO | | | | | | | | |
| Example 3 | Ny-B | MXD | PE | EAA | 80/10/5/5 | 8/9 | 33/35 | 80/90 | 10.0 | 69 | 9 |
| Example 4 | Ny-B | MXD | PE | EAA | 70/20/5/5 | 4/5 | 28/30 | 100/110 | 6.8 | 65 | 11 |
| Example 5 | Ny-B | MXD | PE | EAA | 60/30/5/5 | 3/4 | 25/27 | 115/140 | 5.3 | 46 | 15 |
| Example 6 | Ny-B | MXD | PE | EAA | 50/40/5/5 | 3/4 | 20/23 | 130/145 | 4.3 | 31 | 20 |
| Example 7 | Ny-B | MXD | PE | EAA | 75/20/2.5/2.5 | 4/5 | 29/32 | 105/110 | 6.3 | 68 | 6 |
| Example 8 | Ny-B | MXD | PE | EAA | 65/20/7.5/7.5 | 4/5 | 28/30 | 100/105 | 6.5 | 44 | 23 |
| Example 9 | Ny-B | MXD | PE | EAA | 60/20/10/10 | 3/4 | 30/32 | 95/100 | 7.0 | 40 | 26 |
| Example 10 | Ny-A | MXD | – | EAA | 60/30/10 | 3/4 | 18/22 | 145/120 | 3.4 | 43 | 6.5 |

Example 10

60% by weight of Ny-A, 30% by weight of MXD same as used in Example 1, and 10% by weight of EAA same as used in Example 1 were mixed, and an inflation stretched tubular film having a thickness of 30μm and a width of 65 mm was made from the mixture in the same way as Examples 3-9. The percents of stretch of the film were 4.0(L) and 4.5 (T). The results of measurements of dimensional change, percentage of shrinkage, modulus of elasticity at 1% elongation, $PO_2$, WVTR and haze of the obtained film are shown in Table 2. It will be seen that this film can meet all of the specified property requirements.

Pork sausage was filled in this tubular film with a filling rate of 10% by a conventional method. The filling rate of 10% means the sate which the girth of tube casing after filling increases by 10% than that in before filling. After cooking at 80°C for 60 minutes, the sausage filled in said film was kept in a refrigerator at 5°C for 24 hours and then formation of wrinkle on the surface of the sausage was visually observed. Also, for determining shelf life after storage in a refrigerator at 5°C for 30 days, the state of putrefaction (such as mold) and loss in weight were observed or measured. It was found that the surface of the sausage was free of wrinkle and mold, and that there was maintained good adhesion between sausage and the inside of the film, causing no release of water, and the loss in weight was only 0.3%, which is low enough to satisfy the practical preservation stability.

Recipe of pork sausage:

Lard, water, common salt, potato starch and phosphate were mingled with the lean of pork in the ratios of 25, 25, 1.8, 5 and 0.55, respectively, to 100 of the lean of pork. spices such as pepper, sodium glutaminate, etc., were added in an amount of 0.8 phr.

Example 11

Liver sausage was filled in a stretched tubular film same as used in Example 10 and then subjected to retort sterilization under the conditions of 112°C, 25 minutes and 2.5 kg/cm$^2$ pressure. After keeping this sausage in storage at 20°C for 30 days, the sausage surface was checked for determining presence or absence of wrinkle. Also, a generation of mold and a degree of fading of color of sausage are observed as the practical preservation stability. The degree of fading of color of sausage was measured by a differential colorimeter (Σ80 mfd. by Nippon Denshoku) to determine the _a_ value (reddish color). Further, external appearance (state of putrefaction) and loss in weight were observed or measured. As a result, the sausage film surface was found free of wrinkle and any sign of putrefaction such as mold in sausage surface was not found, and the _a_ value of the sausage surface after removal from the packaging film was 8.5, indicating satisfactory maintenance of original color of liver. The _a_ value after the retort sterilization treatment was 9.0, and the loss in weight was 1.2%, well meeting the practical preservation stability.

Recipe of liver sausage:

49% of the lean of ham, 34% of hog liver, 10% of lard, 4% of corn starch, 1.8% of common salt, 0.36% of phosphate and 0.8% of spice were mixed.

Comparative Example 7

A stretched tubular film (30μm thick and 65 mm wide) was made from Ny-B alone in the same way as Example 10. Liver sausage same as used in Example 11 was filled in this tubular film, subjected to retort sterilization under the conditions of 112°C, 25 minutes and 2.5 kg/cm$^2$ pressure and then kept in storage at 20°C for 30 days, after which the sausage film surface was checked to see if it had wrinkle. Also, a generation of mold and a degree of fading color of sausage are observed as the practical preservation stability. The degree of fading of the color of sausage was measured by a differential colorimeter same as Example 11. Further, external appearance such as putrefaction and loss in weight were observed or measured. As a result, the sausage film surface was found heavily wrinkled. Although no sign of putrefaction such as mold was noted, the _a_ value of the sausage surface after removal from the packaging film was as small as 6.2, and the liver has lost its original reddish color. The loss in weight was as large as 6%, indicating that this film can not stand practical use.

Comparative Example 8

A stretched tubular film (30μm thick and 65 mm wide) was made from the resin composition of Comparative Example 4 in the same way as Example 10.

As in Example 11, liver sausage was filled in this tubular film, subjected to retort sterilization under the conditions of 112°C, 25 minutes and 2.5 kg/cm$^2$ pressure and then kept in storage at 20°C for 30 days. Thereafter, the sausage film surface was visually observed to see whether it was wrinkled or generated mold. Also, the degree of fading of the color of sausage was measured by a color difference meter. It was found that the sausage film surface was wrinkled and sausage was also hard as a result of release of water. Loss in weight was 7%, indicating that this film can not stand practical use.

The $\underline{a}$ value of the sausage surface after removal from the packaging film was 7.3, and the sausage has lost its original reddish color. The $\underline{a}$ value after the retort sterilization treatment was 7.5.

Examples 12-14

A resin composition same as used in Example 10 was melt extruded and worked into pellets by using a twin-screw extruder in the same way as Example 1. The pellets were further worked into a pressed sheet according to the method of Example 1 and this sheet was stretched equally in both longitudinal and transverse directions by a biaxial stretching machine to make the films which have been stretched 4 times (Example 12), 9 times (Example 13) and 16 times (Example 14) in terms of area stretch ratio. dimensional change, percentage of shrinkage, $PO_2$, haze and flatness of each of said films were measured, the results being shown in Table 3. It will be seen that flatness and percent shrinkage tend to increase while $PO_2$ and haze tend to lower and dimensional change is small as area stretch ratio increases. These indicate practical usefulness of the films according to the present invention.

Table 3

| | Area stretch ratio (times) | Flatness | Dimensional change % | Shrinkage change % | $PO_2$ x10$^{-12}$ | Haze % |
|---|---|---|---|---|---|---|
| Example 12 | 4 | 10 | 1 | 2 | 9.0 | 40 |
| Example 13 | 9 | 13 | 1 | 13 | 6.4 | 25 |
| Example 14 | 16 | 30 | 3 | 22 | 4.1 | 11 |
| Comp. Example 9 | 1 | 1.6 | 0 | 0 | 20.0 | 70 |

Comparative Example 9

The press sheet of Example 12 (100 μm thick) before the biaxially stretching was used. The dimensional change, percent of shrinkage, $PO_2$, haze and flatness of the film were measured and the results were shown in the Table 3. The non-stretched sheet had scarcely shrinkability and $PO_2$ and haze of the film were high and could not satisfy all properties in the same time.

As viewed above, the film of the present invention is suited for packaging of food, especially ham, sausage and the like. The food packaged with the film can be safely subjected to boiling or retort sterilization treatments with the film not deformed by such treatments. Also, after retort sterilization treatment, the liver sausage packaged with the film will no suffer discoloration due to oxidative degradation. Further, the content is very little in loss in weight due to passage of moisture through the film during storage of the content.

**Claims**

1. A biaxially oriented film of a resin composition comprising 45-90% by weight of an aliphatic polyamide, 5-45% by weight of a xylylene polyamide and 5-30% by weight of a polyolefin, wherein:

   the aliphatic polyamide has a crystal melting point of 240°C or below;
   the xylylene polyamide is a polyamide resin synthesized by a polycondensation reaction of metaxylylene diamine or a diamine mixture consisting of 60% by weight or more of metaxylylenediamine and 40% by weight or less of paraxylenediamine, and an $\alpha,\omega$-straight chain aliphatic dibasic acid having 6 to 12 carbon atoms; and
   the polyolefin is one or more selected from high-density polyethylenes, medium-density polyethylenes, low-density polyethylene, polypropylene, ethylene-vinyl acetate copolymer with a vinyl acetate content of 5 to 20% by weight, ethylene-ethyl acrylate copolymer with an ethylacrylate content of 5 to 20% by weight, ethylene-methylacrylate copolymer with a methylacrylate content of 5 to 20% by weight, ethylene-propylene copolymer with an ethylene content of 2 to 7% by weight, ethylene-methacrylic acid copolymer with a methacrylic acid content of 5 to 20% by weight, ethylene-acrylic acid copolymer with an acrylic acid content of 5 to 20% by weight, linear low-density polyethylenes (LLDPE), very-low-density polyethylenes (VLDPE) and ionomers, wherein the polyolefin comprises not less than 20% by weight of ethylene-acrylic acid copolymer, ethylene-ethylacrylate copolymer or ethylene-methylacrylate copolymer;

said film having modulus of elasticity at 1% elongation of 20 to 160 kg/mm$^2$ at 23°C and a relative humidity of 60% and water vapour transmission rate of not more than 70 g/m$^2$.day at 40°C and a relative humidity of 90%.

2. An oriented film as claimed in claim 1, wherein the dimensional change of said film after being left in an atmosphere of 23°C and a relative humidity of 60% for 24 hours is not more than 10%.

3. An oriented film as claimed in claim 1 or 2 wherein the glass transition temperature of said xylylene polyamide is 50°C or above.

4. An oriented film as claimed in claim 1, 2 or 3 wherein the aliphatic polyamide is one or more selected from nylon 6, nylon 69, nylon 610, nylon 612, nylon 9, nylon 11, nylon 12, nylon 6-66, nylon 6-69, nylon 6-10, nylon 6-12, nylon 6-66-610 and nylon 66-610-12.

5. An oriented film as claimed in any preceding claim, wherein the aliphatic polyamide is used in an amount of 50 to 85% by weight.

6. An oriented film as claimed in any preceding claim, wherein the aliphatic dibasic acid is selected from adipic acid, sebacic acid, suberic acid, diundecanoic acid and didodecanoic acid.

7. An oriented film as claimed in any preceding claim, wherein the xylylene polyamide is selected from polymetaxylyleneadipamide, polymetaxylylenesebacamide, polymetaxylylenesuberamide, metaxylylene-paraxylyleneadipamide copolymer, metaxylylene-paraxylylenepimeramide copolymer, metaxylylene-paraxylyleneazeramide copolymer and metaxylylene-paraxylyleneadibamide-sebacamide copolymer.

## Patentansprüche

1. Biaxial orientierte Folie aus einer Harzzusammensetzung, welche 45 bis 90 Gew.-% eines aliphatischen Polyamids, 5 bis 45 Gew.-% eines Xylylenpolyamids und 5 bis 30 Gew.-% eines Polyolefins enthält, wobei

das aliphatische Polyamid einen Kristallschmelzpunkt von 240°C oder weniger hat,
das Xylylenpolyamid ein Polyamidharz ist, das durch eine Polykondensationsreaktion von Metaxylylendiamin oder einem Diamingemisch, das aus 60 Gew.-% oder mehr Metaxylylendiamin und 40 Gew.-% oder weniger Paraxylylendiamin besteht, mit einer geradkettigen, aliphatischen, $\alpha,\omega$-dibasischen Säure mit 6 bis 12 Kohlenstoffatomen synthetisiert wurde, und
das Polyolefin eines oder mehr unter Polyethylenen hoher Dichte, Polyethylenen mittlerer Dichte, Polyethylenen niederer Dichte, Polypropylen, Ethylen-Vinylacetat-Copolymeren mit einem Vinylacetatanteil von 5 bis 20 Gew.-%, Ethylen-Ethylacrylat-Copolymeren mit einem Ethylacrylatanteil von 5 bis 20 Gew.-%, Ethylen-Methylacrylat-Copolymeren mit einem Methylacrylatanteil von 5 bis 20 Gew.-%, Ethylen-Propylen-Copolymeren mit einem Ethylenanteil von 2 bis 7 Gew.-%, Ethylen-Methacrylsäure-Copolymeren mit einem Methacrylsäureanteil von 5 bis 20 Gew.-%, Ethylen-Acrylsäure-Copolymeren mit einem Acrylsäureanteil von 5 bis 20 Gew.-%, linearen Polyethylenen niederer Dichte (LLDPE), Polyethylenen sehr niedriger Dichte (VLDPE) und Ionomeren ausgewähltes Polyolefin ist, wobei das Polyolefin nicht weniger als 20 Gew.-% Ethylen-Acrylsäurecopolymer, Ethylen-Ethylacrylat-Copolymer oder Ethylen-Methylacrylat-Copolymer enthält,
wobei die Folie einen Elastizitätsmodul bei 1% Dehnung von 20 bis 160 kg/mm$^2$ bei 23°C und einer relativen Feuchte von 60% und eine Wasserdampfdurchlässigkeitsrate von nicht mehr als 70 g/m$^2$·Tag bei 40°C und einer relativen Feuchte von 90% aufweist.

2. Orientierte Folie gemäß Anspruch 1, wobei die Dimensionsänderung der Folie nicht mehr als 10 % beträgt, wenn die Folie 24 Stunden einer Atmosphäre von 23°C und einer relativen Feuchte von 60% ausgesetzt wird.

3. Orientierte Folie gemäß Anspruch 1 oder 2, wobei die Glasübergangstemperatur des Xylylenpolyamids 50°C oder höher ist.

4. Orientierte Folie gemäß Anspruch 1, 2 oder 3, wobei das aliphatische Polyamid ein oder mehrere Polyamide ist, die unter Nylon 6, Nylon 69, Nylon 610, Nylon 612, Nylon 9, Nylon 11, Nylon 12, Nylon 6-66, Nylon 6-69, Nylon 6-10, Nylon 6-12, Nylon 6-66-610 und Nylon 66-610-12 ausgewählt sind.

5. Orientierte Folie gemäß einem der vorhergehenden Ansprüche, wobei das aliphatische Polyamid in einer Menge von 50 bis 85 Gew.-% verwendet wird.

6. Orientierte Folie gemäß einem der vorhergehenden Ansprüche, wobei die aliphatische dibasische Säure unter Adipinsäure, Sebacinsäure, Suberinsäure, Diundekansäure und Didodekansäure ausgewählt ist.

7. Orientierte Folie gemäß einem der vorhergehenden Ansprüche, wobei das Xylylenpolyamid unter Polymetaxylylenadipinsäureamid, Polymetaxylylensebacinsäureamid, Polymetaxylylensuberinsäureamid, Metaxylylen-Paraxylylenadipinsäureamid-Copolymer, Metaxylylen-Paraxylylenpimelinsäureamid-Copolmer, Metaxylylen-Paraxylylen-Azelainsäureamidcopolymer und Metaxylylen-Paraxylylenadipinsäureamid-Sebazinsäureamid-Copolymer ausgewählt ist.

**Revendications**

1. Film à orientation biaxiale, à base d'une composition de résine, comprenant 45 à 90 % en poids d'un polyamide aliphatique, de 5 à 45 % en poids d'un xylylène polyamide et de 5 à 30 % en poids d'une polyoléfine, dans lequel :

   le polyamide aliphatique possède un point de fusion cristalline de 240° C ou inférieur ;
   le xylylène polyamide est une résine polyamide synthétisée par une réaction de polycondensation de la métaxylylène diamine ou d'un mélange de diamines constitué de 60 % en poids , ou plus, de métaxylylènediamine et de 40% en poids , ou moins, de paraxylènediamine, et d'un acide $\alpha$, $\omega$- aliphatique dibasique à chaine linéaire , comportant de 6 à 12 atomes de carbone ; et
   la polyoléfine est un polyéthylène, ou plus, sélectionné parmi les polyéthylènes haute-densité, les polyéthylènes à densité moyenne, les polyéthylènes de faible densité, le polypropylène, le copolymère éthylène/acétate de vinyle ayant une teneur en acétate de vinyle de 5 à 20 % en poids , le copolymère éthylène/acrylate d'éthyle ayant une teneur en acrylate d'éthyle de 5 à 20 % en poids , le copolymère éthylène/acrylate de méthyle ayant une teneur en acrylate de méthyle de 5 à 20 % en poids, le copolymère éthylène-propylène ayant une teneur en éthylène de 2 à 7% en poids , le copolymère éthylène/acide méthacrylique, ayant une teneur en acide méthacrylique de 5 à 20% en poids, le copolymère éthylène/acide acrylique ayant une teneur en acide acrylique de 5 à 20 % en poids ,des polyéthylènes linéaires de faible densité (LLDPE), des polyéthylènes de très faible densité (VLDPE) et des ionomères , dans lesquels la polyoléfine comprend pas moins de 20 % en poids d'un copolymère éthylène/acide acrylique , d'un copolymère d'éthylène/acrylate d'éthyle ou d'un copolymère éthylène/acrylate de méthyle ;
   ledit film présentant un module d'élasticité, à une élongation de 1%, de 20 à 160 kg/mm$^2$ à 23°C et une humidité relative de 60% et une vitesse de transmission de vapeur d'eau qui n'est pas supérieure à 70 g/m$^2$ jour à 40°C et une humidité relative de 90%.

2. Film orienté selon la revendication 1 , dans lequel la variation de dimensions dudit film après avoir été maintenu dans une atmosphère à 23° C et à une humidité relative de 60 % pendant 24 heures n'est pas supérieure à 10%.

3. Film orienté selon la revendication 1, ou 2, dans lequel la température de transition vitreuse dudit xylylène polyamide est 50° ou plus.

4. Film orienté selon la revendication 1, 2 ou 3, dans lequel le polyamide aliphatique est un nylon, ou davantage, sélectionné à partir du nylon 6, nylon 69, nylon 610, nylon 612, nylon 9, nylon 11, nylon 12, nylon-6-66, nylon 6-69, nylon 6-10, nylon 6-12, nylon 6-66-610 et nylon 66-610-12.

5. Film orienté selon l'une quelconque des revendications précédentes, dans lequel le polyamide aliphatique est utilisé avec une teneur de 50 à 85% en poids.

6. Film orienté selon l'une quelconque des revendications précédentes, dans lequel l'acide aliphatique dibasique est sélectionné parmi l'acide adipique, l'acide sébacique, l'acide subérique, l'acide diundécanoïque et l'acide didodécanoïque.

7. Film orienté selon l'une quelconque des revendications précédentes, dans lequel le xylylène polyamide est sélectionné parmi le poly-métaxylylèneadipamide,le polymétaxylylènesébacamide, le polymétaxylylènesubéramide, le copolymère métaxylylène-paraxylylèneadipamide, le copolymère métaxylylène-paraxylylènepiméramide, le copolymère métaxylylène-paraxylylèneazéramide et le copolymère métaxylylène-paraxylylèneadibamide-sébacamide.